# EUROPÄISCHE PATENTANMELDUNG

(11) **EP 2 395 617 A2**
(43) Veröffentlichungstag der Anmeldung: **14.12.2011**
(21) Anmeldenummer: 11163112.3
(22) Anmeldetag: 20.04.2011
(51) Int. Cl.: H02B 1/30

(54) **Seitenwand, Seitenwand-Anordnung und Verteilerschrank**

(30) Priorität: 10.06.2010 DE 102010023341
(71) Anmelder: SIEMENS AKTIENGESELLSCHAFT, 80333 München (DE)
(72) Erfinder: Zempelin, Jens, 93161, Sinzing (DE)

(57) **Zusammenfassung**

Die erfindungsgemäße Seitenwand (10) ist für einen Verteilerschrank (1) vorgesehen, welcher zur Aufnahme von Elektroinstallationsgeräten ausgebildet ist. Dabei weist die Seitenwand (10) zumindest einen Verbindungsbereich (11) auf, welcher zum Koppeln der Seitenwand (10) mit einer benachbart angeordneten, zweiten Seitenwand (20) eines zweiten Verteilerschranks (2) vorgesehen ist. Der Verbindungsbereich (11) ist dabei aus der Seitenwand (10) teilweise herauslösbar, wodurch eine erste Öffnung (12) in der Seitenwand (10) sowie eine mit der Seitenwand (10) verbundene erste Verbindungslasche (13) entsteht, welche in eine zweite Öffnung (22) der zweiten Seitenwand (20) einsteckbar ist, um die beiden Seitenwände (10, 20) durch Biegen der ersten Verbindungslasche (13) miteinander zu verbinden. Auf diese Weise ist eine einfache und schnelle Montage der beiden Seitenwände (10, 20) realisierbar, ohne dass hierzu spezielle Werkzeuge oder Verbindungsmittel erforderlich sind.

## Beschreibung

Die Erfindung betrifft eine Seitenwand für einen Verteilerschrank, welcher zur Aufnahme von Elektroinstallationsgeräten ausgebildet ist, sowie einen derartigen Verteilerschrank. Weiterhin betrifft die Erfindung eine Seitenwand-Anordnung zum formschlüssigen Koppeln zweier Seitenwände.

Elektroinstallationsverteiler werden in der Elektroinstallationstechnik eingesetzt. Dabei handelt es sich um einen verschließbaren Kasten zur Verteilung des elektrischen Stromes, in dem elektrische und/oder elektronische Komponenten einer Anlage - beispielsweise einer einzelnen Maschine, einer Fertigungsanlage oder eines Gebäudes - untergebracht und vor Umgebungseinflüssen geschützt werden können. Weiterhin werden durch den Elektroinstallationsverteiler auch umstehende Personen vor elektrischem Schlag geschützt. Elektroinstallationsverteiler werden auch als Verteilerkasten oder schlicht als Verteiler bezeichnet, können als Wand- oder Standverteiler ausgebildet sein und - je nach Anwendung - aus Kunststoff, aus lackiertem Stahlblech oder aus Aluminiumblech in verschiedenen Bauformen und Baugrößen gefertigt werden.

In einen derartigen Elektroinstallationsverteiler können verschiedene elektrische Bauelemente bzw. Elektroinstallationsgeräte, beispielsweise Sicherungen, Leitungsschutzschalter, Relais, Schütze oder Fehlerstromschutzschalter angeordnet werden, so dass sie durch den Verteiler vor äußeren Einflüssen wie beispielsweise Staub oder Feuchtigkeit sowie vor äußerer mechanischer Krafteinwirkung oder unbefugtem Zugriff geschützt sind. Im Inneren des Elektroinstallationsverteilers sind zumeist Halterungen zur Strukturierung des Innenaufbaus des Verteilers sowie Stromführungssysteme zum Anschluss der elektrischen und/oder elektronischen Komponenten vorgesehen.

Elektroinstallationsverteiler sind allgemein aus den Druckschriften DE 10 2005 022 537 B4 oder DE 10 2006 054 429 A1 bekannt.

Werden zur Realisierung einer elektrischen Anlage mehrere einzelne Verteilerschränke benötigt, so kann es zweckdienlich sein, diese benachbart anzuordnen, um elektrische Leitungen ohne großen Aufwand von einem Verteilerschrank zum nächsten führen zu können. Werden die einzelnen Verteilerschränke unmittelbar nebeneinander angeordnet, so ist es vorteilhaft, diese mechanisch miteinander zu verbinden, beispielsweise um die Standfestigkeit zu erhöhen oder Relativbewegungen zwischen den Verteilerschränken zu unterbinden. Hierzu werden heutzutage entweder Verbindungslaschen eingesetzt, die mit den beiden zu verbindenden Verteilerschränken verschraubt werden, oder es werden Schraubverbindungen durch die benachbarten Seitenwände verwendet. Für beide Montagemöglichkeiten ist jedoch zusätzliches Werkzeug erforderlich, woraus ein nicht unerheblicher Montageaufwand resultiert, vor allem wenn die Montagestelle nicht oder nur schwer zugänglich ist.

Es ist deshalb die Aufgabe der vorliegenden Erfindung, eine Realisierungsmöglichkeit zum Verbinden zweier nebeneinander angeordneter Seitenwände zweier Verteilerschränke anzugeben, welche eine einfache und schnelle Montage erlaubt.

Diese Aufgabe wird durch die Seitenwand, die Seitenwand-Anordnung sowie den Verteilerschrank gemäß den unabhängigen Ansprüchen gelöst. Vorteilhafte Ausgestaltungen sind Gegenstand der abhängigen Ansprüche.

Die erfindungsgemäße Seitenwand ist für einen Verteilerschrank vorgesehen, welcher zur Aufnahme von Elektroinstallationsgeräten ausgebildet ist. Dabei weist die Seitenwand zumindest einen Verbindungsbereich auf, welcher zum Koppeln der Seitenwand mit einer benachbart angeordneten, zweiten Seitenwand eines zweiten Verteilerschranks vorgesehen ist. Der Verbindungsbereich ist dabei aus der Seitenwand teilweise herauslösbar, wodurch eine erste Öffnung in der Seitenwand sowie eine mit der Seitenwand verbundene erste Verbindungslasche entsteht, welche in eine zweite Öffnung der zweiten Seitenwand einsteckbar ist, um die beiden Seitenwände durch Biegen der ersten Verbindungslasche miteinander zu verbinden.

Die Verwendung einer derart gestalteten Seitenwand ermöglicht eine einfache und schnelle Montage, ohne dass hierzu spezielle Werkzeuge oder Verbindungsmittel erforderlich sind. Durch das teilweise Herauslösen oder Herausbrechen des Verbindungsbereichs aus der ersten Seitenwand entsteht eine Verbindungslasche, welche einstückig an die Seitenwand angeformt ist. Der in der Seitenwand angeordnete Verbindungsbereich stellt somit ein latent vorhandenes Verbindungsmittel dar, welches im Bedarfsfall teilweise aus der Seitenwand herausgelöst wird und als Verbindungslasche zum Koppeln einer weiteren Seitenwand zur Verfügung steht. Durch das Einstecken der Verbindungslasche in die in der zweiten Seitenwand ausgebildete zweite Öffnung kann eine formschlüssige Kopplung oder Verbindung der beiden Seitenwände erreicht werden. Auf diese Weise können bei Bedarf mehrere nebeneinander angeordnete Verteilerschränke miteinander gekoppelt werden, wodurch die Anordnung stabilisiert und gesichert wird. Die Betriebssicherheit wird dadurch verbessert.

In einer vorteilhaften Weiterbindung der Seitenwand ist der Verbindungsbereich zumindest teilweise von einer vorgestanzten oder vorgeprägten Kontur umgeben, um entlang der Kontur ein einfaches Herauslösen der ersten Verbindungslasche zu ermöglichen. Mit Hilfe einer derartigen Kontur, welche beispielsweise durch Prägen, durch Vorstanzen oder durch Falzen hergestellt werden kann, wird das teilweise Herauslösen der ersten Verbindungslasche aus der Seitenwand deutlich erleichtert. Hierfür kann beispielsweise ein einfacher Montagehammer verwendet werden, um die erste Verbindungslasche entlang der vorgeprägten Kontur von der Seitenwand zu trennen. Die erste Verbindungslasche kann dann relativ zur Seitenwand von Hand in die erforderliche Position gebogen werden. Der Montageaufwand kann dadurch deutlich reduziert werden.

In einer weiteren vorteilhaften Weiterbindung der Seitenwand ist die Kontur im Wesentlichen u-förmig ausgebildet. Die sich daraus ergebende Form der ersten Verbindungslasche entspricht im Wesentlichen der Form eines Rechtecks mit abgerundeten Ecken, welches an drei Seiten durch eine entsprechende Vorprägung aus der Seitenwand herausgetrennt werden kann. An der vierten Seite weist die Verbindungslasche eine Biegekante auf, über die sie weiterhin fest mit der Seitenwand verbunden ist. Um ein Herausbiegen, d.h. das teilweise Herauslösen der ersten Verbindungslasche aus der Seitenwand zu erleichtern, kann auch die Biegekante entsprechend vorgeprägt werden. Diese Vorprägung unterscheidet sich von den übrigen Vorprägungen, welche zum einfachen Trennen der flächigen Verbindung zwischen Seitenwand und Verbildungslasche dienen, hinsichtlich der Intensität der Prägung.

In einer weiteren vorteilhaften Weiterbindung der Seitenwand ist die Kontur trapezförmig ausgebildet, wobei das mit der Seitenwand verbundene Ende der ersten Verbindungslasche breiter ist als das herausgelöste, entgegengesetzte Ende der ersten Verbindungslasche, um ein einfaches Einführen in die zweite Öffnung zu ermöglichen. Die erste Verbindungslasche weist an ihrer Wurzel, an der sie über die Biegekante mit der Seitenwand verbunden ist, eine größere Breite auf, als an ihrem entgegengesetzten, im herausgelösten Zustand freien Ende. Durch diese Formgebung der Verbindungslasche, welche trapezförmig, d.h. konisch zulaufend ausgebildet ist, wird erreicht, dass die Breite der ersten Verbindungslasche an ihrem freien Ende kleiner ist als die Breite der in der zweiten Seitenwand ausgebildeten zweiten Öffnung. Auf diese Weise wird das Einführen der ersten Verbindungslasche in die zweite Öffnung vereinfacht. Der Zeitaufwand für die Montage wird dadurch weiter verringert.

In einer weiteren vorteilhaften Weiterbindung weist die Seitenwand einen metallischen Werkstoff auf. Eine aus Blech, beispielsweise aus Aluminiumblech oder Stahlblech gefertigte Seitenwand hat den Vorteil, dass durch die flächigen Berührungsstellen der ersten Verbindungslasche mit der zweiten Seitenwand eine Erdungsverbindung zwischen den beiden Seitenwänden gebildet ist. Weiterhin sind die entsprechenden Bleche mit herkömmlichen Produktionsanlagen leicht zu verarbeiten und weisen die für eine derartige Seitenwand mit einer herauslösbaren Verbindungslasche erforderlichen Materialeigenschaften hinsichtlich Stabilität und Festigkeit auf.

In einer weiteren vorteilhaften Weiterbindung der Seitenwand umgreift die erste Verbindungslasche die zweite Seitenwand formschlüssig. Hieraus ergibt sich der Vorteil, dass unter normalen Betriebsbedingungen, beispielsweise bei Schwingungen, bei Erschütterungen oder unter Schwerkrafteinfluss die Verbindung der beiden Seitenwände nicht ohne Weiteres lösbar ist. Erst durch ein Zurückbiegen der ersten Verbindungslasche können die beiden Seitenwände wieder voneinander getrennt werden. Ist die erste Verbindungslasche u-förmig um die zweite Seitenwand herumgebogen, so dass die zweite Seitenwand teilweise zwischen der Verbindungslasche und der ersten Seitenwand angeordnet ist, so könnte die Verbindung auch durch eine Relativbewegung der beiden Seitenwände in vertikaler Richtung wieder gelöst werden.

In einer weiteren vorteilhaften Weiterbindung der Seitenwand ist die zweite Öffnung durch teilweises Herauslösen eines zweiten Verbindungsbereichs aus der zweiten Seitenwand gebildet, wodurch eine mit der zweiten Seitenwand verbundene, zweite Verbindungslasche entsteht, welche in die erste Öffnung einsteckbar ist, um die beiden Seitenwände durch Biegen der zweiten Verbindungslasche miteinander zu verbinden. Auf diese Weise ist es möglich, die Verbindung der beiden Seitenwände auch gegen Relativbewegung der beiden Seitenwände in vertikaler Richtung zu sichern, wodurch die Stabilität der Verbindung sowie die Betriebssicherheit weiter verbessert werden.

In einer weiteren vorteilhaften Weiterbindung der Seitenwand weist die erste Verbindungslasche eine erste Bohrung auf, welche in montierem Zustand mit zumindest einer weiteren, in der zweiten Seitenwand ausgebildeten Bohrung zur Deckung gebracht werden kann, um eine zusätzliche Sicherung der Verbindung der beiden Seitenwände - beispielsweise durch Nieten oder Verschrauben - zu ermöglichen.

Durch eine derartige zusätzliche Sicherung kann die Festigkeit der Verbindung und damit ihrer Sicherheit deutlich erhöht werden. Beispielsweise ist es möglich, die weitere Bohrung derart in der zweiten Verbindungslasche der zweiten Seitenwand anzubringen, dass sie im montierten Zustand deckungsgleich zur ersten Bohrung in der ersten Verbindungslasche angeordnet ist. Anschließend kann die Verbindung der beiden Seitenwände durch Anbringen einer Sicherungsschraube oder eines Niets gesichert werden. Wird die erste Verbindungslasche derart durch die zweite Öffnung geführt und anschließend gebogen, dass sie parallel zur zweiten Seitenwand orientiert ist, so ist es ferner möglich, die weitere Bohrung direkt in der zweiten Seitenwand anzubringen, um die erste Verbindungslasche mit der zweiten Seitenwand zu verschrauben. Wird die Bohrung auch durch die erste Seitenwand hindurchgeführt, so dass alle drei Bohrungen deckungsgleich zueinander angeordnet sind, so kann die Sicherung durch die erste Verbindungslasche sowie die beiden Seitenwände auch durch Nieten oder ebenfalls durch Verschrauben erfolgen.

In einer weiteren vorteilhaften Weiterbindung weist die Seitenwand einen weiteren Verbindungsbereich zum Koppeln mit der zweiten Seitenwand auf. Mit Hilfe einer derartigen weiteren Verbindung der ersten Seitenwand zur zweiten Seitenwand kann die Positioniergenauigkeit der beiden Seitenwände zueinander deutlich verbessert werden, ohne dabei den Montageaufwand wesentlich zu erhöhen.

In einer weiteren vorteilhaften Weiterbindung ist die Seitenwand des ersten Verteilerschranks mit der zweiten Seitenwand des zweiten Verteilerschranks über zumindest eine erste Verbindungslasche gekoppelt. Eine derartige Kopplung der beiden Seitenwände stellt eine kostengünstige sowie einfach zu realisierende Möglichkeit zum Verbinden zweier Verteilerschränke dar.

Die erfindungsgemäße Seitenwand-Anordnung zum formschlüssigen Koppeln zweier Seitenwände weist eine ersten Seitenwand eines ersten Verteilerschranks und eine hierzu benachbart angeordnete zweite Seitenwand eines zweiten Verteilerschranks auf. Dabei weist die erste Seitenwand eine einstückig angeformte Verbindungslasche auf, welche durch teilweises Herauslösen aus der ersten Seitenwand gebildet ist, wodurch eine erste Öffnung in der ersten Seitenwand gebildet wird. Die Verbindungslasche ist dabei durch eine in der zweiten Seitenwand ausgebildete zweite Öffnung geführt und umgreift die zweite Seitenwand formschlüssig, um die beiden Seitenwände miteinander zu koppeln.

Mit Hilfe dieser Anordnung ist es möglich, zwei Seitenwände auf einfache Art und Weise miteinander zu verbinden. Da für diese Verbindung keine Schrauben erforderlich sind, wird der Montageaufwand deutlich vereinfacht. Sind die Seitenwände aus Metallblech oder weisen sie zumindest metallischen Werkstoff auf, so ist es ebenfalls möglich, eine entsprechende Erdungsverbindung zwischen den beiden Seitenwänden durch Kontakte herzustellen. Insgesamt erlaubt die Anordnung eine schnelle und einfache Montage, für die keine speziellen Werkzeuge erforderlich sind.

In einer vorteilhaften Weiterbindung der Seitenwand-Anordnung weist die zweite Seitenwand eine einstückig angeformte zweite Verbindungslasche auf, welche durch Herauslösen aus der zweiten Seitenwand gebildet ist, wodurch die zweite Öffnung in der zweiten Seitenwand gebildet wird. Dabei ist die zweite Verbindungslasche durch die erste Öffnung geführt und umgreift die erste Seitenwand formschlüssig. Auf diese Weise, d. h. mit Hilfe der zweiten Verbindungslasche, kann die Verbindung der beiden Seitenwände auch gegen Relativbewegungen der beiden Seitenwände in einer weiteren Richtung - beispielsweise in vertikaler Richtung - gesichert werden. Die Sicherheit der Anordnung gegen lösende Verbindung wird damit deutlich erhöht.

Der erfindungsgemäße Verteilerschrank ist zur Aufnahme von Elektroinstallationsgeräten ausgebildet und weist zumindest eine Seitenwand nach einem der Ansprüche 1 bis 10 auf. Hinsichtlich der Vorteile des erfindungsgemäßen Verteilerschranks wird auf die obigen Ausführungen zu den Vorteilen der erfindungsgemäßen Seitenwand bzw. der erfindungsgemäßen Seitenwandanordnung verwiesen.

Im Folgenden werden mehrere Ausführungsbeispiele der Seitenwand bzw. der Seitenwand-Anordnung unter Bezug auf die beigefügten Figuren näher erläutert. In den Figuren sind:
- Figuren 1a bis 1d: schematische Darstellungen eines Ausschnitts der erfindungsgemäßen Seitenwand in zwei unterschiedlichen Positionen in jeweils zwei Ansichten,
- Figuren 2a bis 2c: schematische Darstellungen eines ersten Ausführungsbeispiels der erfindungsgemäßen Seitenwandanordnung,
- Figuren 3a bis 3c: schematische Darstellungen eines zweiten Ausführungsbeispiels der erfindungsgemäßen Seitenwandanordnung,
- Figuren 4a und 4b: schematische Darstellungen eines dritten Ausführungsbeispiels der erfindungsgemäßen Seitenwandanordnung,
- Figur 5: eine schematische Darstellung einer Verteilerschrank-Anordnung.

In den verschiedenen Figuren der Zeichnung sind gleiche Teile stets mit dem gleichen Bezugszeichen versehen. Die Beschreibung gilt für alle Zeichnungsfiguren, in denen das entsprechende Teil ebenfalls zu erkennen ist.

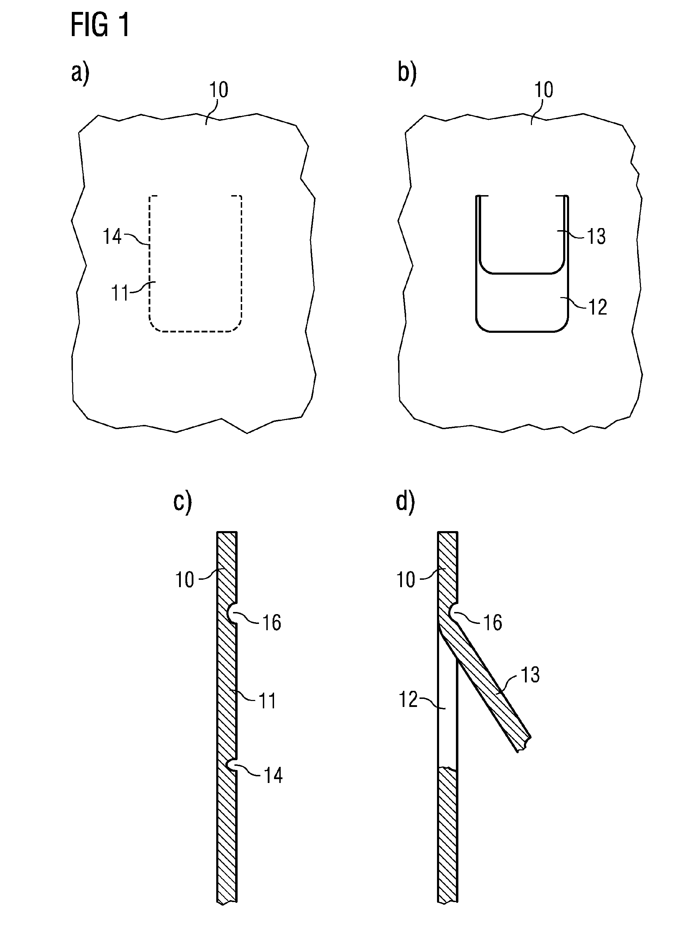

In den Figuren 1a bis 1d ist jeweils ein Ausschnitt der erfindungsgemäßen Seitenwand 10 schematisch in unterschiedlichen Zuständen dargestellt. Dabei zeigen die Figuren 1a und 1b den Ausschnitt in einer Seitenansicht, während in den Figuren 1c und 1d der betreffende Ausschnitt jeweils in einer Schnittdarstellung dargestellt ist.

Die in Figur 1a dargestellte Seitenwand 10 weist einen Verbindungsbereich 11 auf, welcher durch eine Kontur 14, die im dargestellten Fall annähernd rechteckförmig ausgebildet ist, begrenzt ist. Die Kontur 14 ist beispielsweise durch Vorprägen oder Vorfalzen herstellbar und stellt eine Naht dar, entlang derer der von der Kontur 14 zumindest teilweise umschlossene Verbindungsbereich 11 aus der Seitenwand 10 herauslösbar ist. Figur 1c zeigt die zu Figur 1a korrespondierende Schnittdarstellung der Seitenwand 10. In den Figuren 1a und 1c ist der Verbindungsbereich 11 noch nicht aus der Seitenwand 10 herausgelöst, so dass die Seitenwand 10 geschlossen ist und somit auch "ungekoppelt" verwendet werden kann, beispielsweise für einen freistehenden Verteilerschrank, welcher nicht mit einem weiteren Verteilerschrank gekoppelt werden soll.

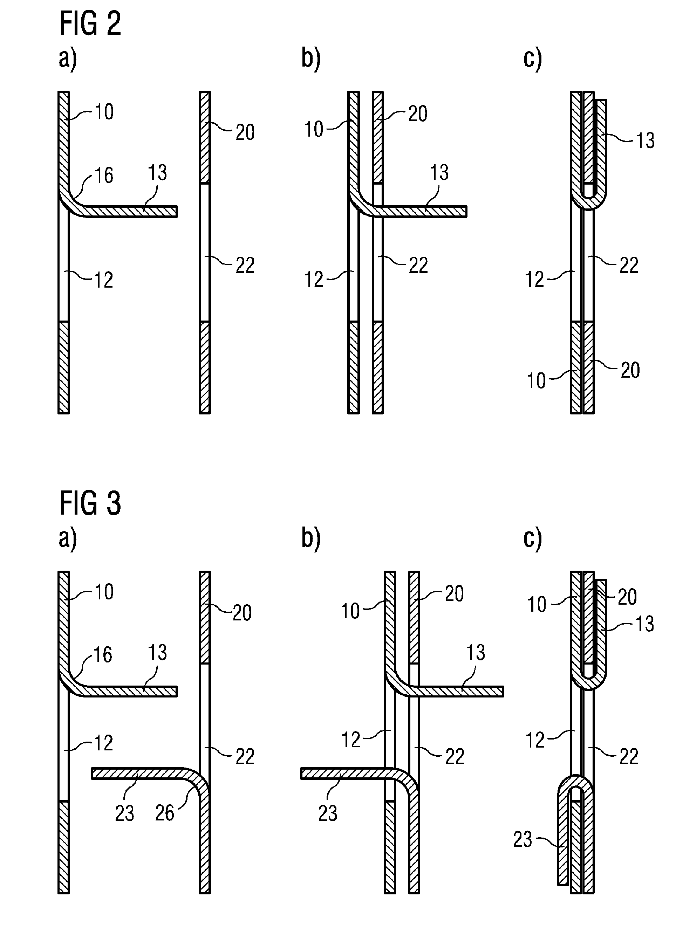

In den Figuren 1b und 1d ist ein Zustand der Seitenwand 10 dargestellt, bei dem der Verbindungsbereich 11 entlang einer u-förmigen Kontur 14 aus der Seitenwand 10 herausgelöst wurde. Hierdurch ist eine erste Öffnung 12 gebildet sowie eine mit der Seitenwand 10 über eine Biegekante 16 verbundene erste Verbindungslasche 13, welche in eine zweite Öffnung 22 einer zweiten Seitenwand 20 einsteckbar ist (siehe Darstellung zu den Figuren 2 und 3). Dabei werden die beiden Seitenwände 10 und 20 durch ein geeignetes Biegen der Verbindungslasche 13 entlang der Biegekante 16 miteinander verbunden, d.h. aneinander gekoppelt.

Auch die Biegekante 16 kann dabei Bestandteil der Kontur 14 sein, welche ebenfalls durch Vorprägen, Vorstanzen oder Vorfalzen herstellbar ist. Im Unterschied zu der u-förmigen Kontur 14, entlang derer die Verbindungslasche 13 aus der Seitenwand 10 heraustrennbar ist, ist die Vorprägung der Biegekante 16 weniger stark ausgeprägt, so dass das Material der Seitenwand 10 an dieser Stelle beim Herauslösen der Verbindungslasche 13 nicht einreißt, sondern lediglich dazu dient, den Verlauf der Biegekante 16 vorzugeben bzw. das Umbiegen der Verbindungslasche 13 zu erleichtern.

In den Figuren 2a bis 2c ist ein erstes Ausführungsbeispiel der erfindungsgemäßen Seitenwandanordnung in mehreren Schnittansichten schematisch dargestellt. Die drei Figuren 2a, 2b und 2c stellen dabei eine zeitliche Abfolge beim Zusammenkoppeln der beiden Seitenwände 10 und 20 dar. Die Seitenwand 10 weist eine erste Verbindungslasche 13 auf, welche durch teilweises Herauslösen, d.h. durch Herausbiegen aus der Seitenwand 10 entlang der u-förmigen Kontur 14 (siehe Fig. 1A und 1B) gebildet ist, wobei die Verbindungslasche 13 über die Biegekante 16 einstückig mit der Seitenwand 10 verbunden bleibt. Durch dieses Herausbiegen der ersten Verbindungslasche 13 wird in der Seitenwand 10 die Öffnung 12 gebildet. Die erste Verbindungslasche 13 ragt dabei zunächst (Fig. 2a und 2b) aus der durch die Seitenwand 10 definierten Ebene in Richtung der zweiten Seitenwand 20 heraus. Im dargestellten Fall ist die erste Verbindungslasche 13 annähernd rechtwinklig zu der durch die Seitenwand 10 definierten Ebene orientiert. Es ist jedoch auch möglich, die erste Verbindungslasche 13 schräg zu dieser Ebene aus der ersten Seitenwand 10 herauszubiegen. Die zweite Seitenwand 20 weist im Bereich der ersten Verbindungslasche 13 eine zweite Öffnung 24 auf, welche hinsichtlich ihrer Lage und Größe im Wesentlichen der ersten Öffnung 14 entspricht. Zum Koppeln der beiden Seitenwände 10 und 20 wird die erste Verbindungslasche 13 in die zweite Öffnung 24 hineingesteckt, bis die beiden Seitenwände 10 und 20 direkt aneinander liegen, d.h. unmittelbar benachbart zueinander angeordnet sind. Durch Umbiegen der ersten Verbindungslasche 13 werden die beiden Seitenwände 10 und 20 schließlich aneinander gekoppelt, indem die ersten Verbindungslasche 13 die zweite Seitenwand formschlüssig umgreift.

In den Figuren 3a bis 3c ist ein zweites Ausführungsbeispiel der erfindungsgemäßen Seitenwandanordnung in mehreren Schnittansichten schematisch dargestellt. Die drei Figuren 3a, 3b und 3c stellen dabei wiederum eine zeitliche Abfolge beim Zusammenkoppeln der beiden Seitenwände 10 und 20 dar. Wie in den Figuren 2a bis 2c weist die Seitenwand 10 wiederum eine erste Verbindungslasche 13 auf, welche durch Herausbiegen entlang der u-förmigen Kontur 14 gebildet und über die Biegekante 16 einstückig mit der Seitenwand 10 verbunden ist. Im Unterschied zu den Figuren 2a bis 2c weist die zweite Seitenwand 20 eine zweite Verbindungslasche 23 auf, welche durch Herausbiegen aus der zweiten Seitenwand 20 gebildet ist, wobei die zweite Öffnung 22 entsteht. Die zweite Verbindungslasche 23 ist - im Gegensatz zur ersten Verbindungslasche 13 - nach unten herausgebogen, über eine Biegekante 26 einstückig mit der Seitenwand 20 verbunden und ragt zunächst (Fig. 3a und 3b) aus der durch die zweite Seitenwand 20 definierten Ebene in Richtung der Seitenwand 10 heraus.

Zunächst werden die beiden Seitenwände 10 und 20 derart zueinander positioniert, dass die Öffnungen 12 und 22 benachbart einander gegenüberliegen (siehe Fig. 3a). Werden anschließend die beiden Seitenwände 10 und 20 wie in Figur 3b dargestellt zueinander geschoben, so wird nicht nur die erste Verbindungslasche 13 in die zweite Öffnung 22 der zweiten Seitenwand 20 eingesteckt, sondern auch die zweite Verbindungslasche 23 in die erste Öffnung 12 der Seitenwand 10. Dies ist möglich, da die erste Verbindungslasche 13 nach oben weggebogen ist, wohingegen die zweite Verbindungslasche 23 nach unten gebogen wurde. Durch Umbiegen der ersten Verbindungslasche 13 bzw. der zweiten Verbindungslasche 23 werden die beiden Seitenwände 10 und 20 schließlich formschlüssig aneinander gekoppelt. Da dabei nicht nur die erste Verbindungslasche 13 die zweite Seitenwand 20 umgreift, sondern auch die Seitenwand 10 von der zweiten Verbindungslasche 23 formschlüssig umgriffen ist, kann die Kopplung steifer und sicherer gegen unbeabsichtigtes Lösen ausgeführt werden.

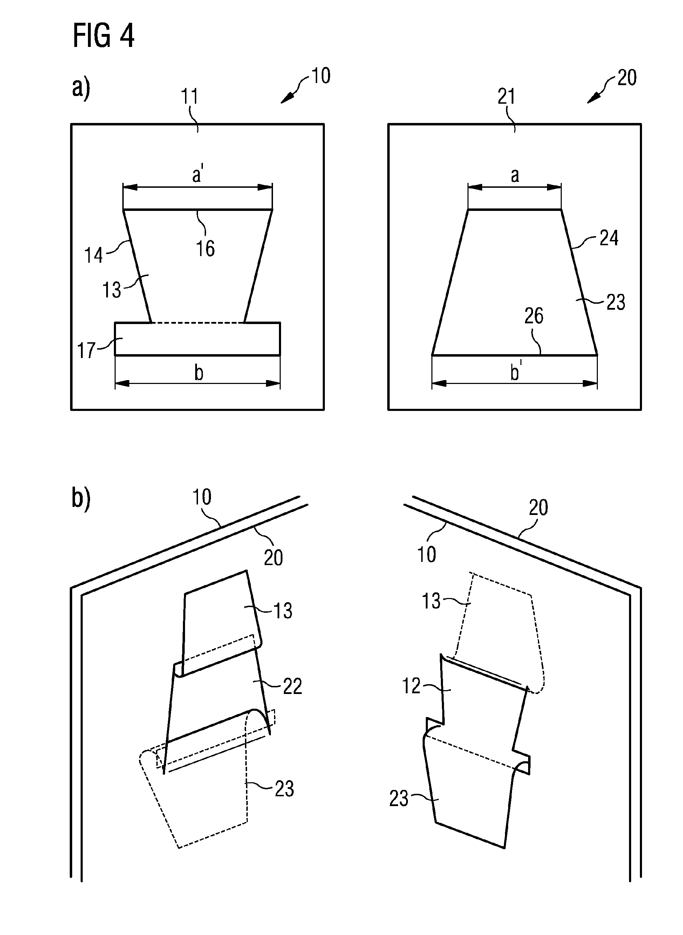

In den Figuren 4a und 4b ist ein drittes Ausführungsbeispiel der erfindungsgemäßen Seitenwandanordnung schematisch dargestellt. Dabei stellt Figur 4a eine Seitenansicht der Verbindungsbereiche 11 und 21 der beiden miteinander zu koppelnden Seitenwände 10 und 20 dar. In Figur 4b sind die bereits miteinander gekoppelten Seitenwände 10 und 20 perspektivisch dargestellt.

Im Unterschied zu den ersten beiden Ausführungsbeispielen sind die erste Verbindungslasche 13 sowie die zweite Verbindungslasche 23 nicht annähernd rechteckig, sondern trapezförmig ausgeführt, um das Einführen in die jeweilige Öffnung 22 bzw. 12 zu erleichtern. Dabei ist darauf zu achten, eine stabile Kopplung der beiden Seitenwände 10 und 20 - vor allem in der in Figur 4a dargestellten horizontalen Richtung - zu erreichen. Hierzu sollte die Breite einer jeden Öffnung 12 bzw. 22 in dem Bereich, in dem die Verbindungslasche 23 bzw. 13 der anderen Seitenwand 20 bzw. 10 durchgeführt und anschließend umgebogen wird, in etwa der Breite der betreffenden Verbindungslasche 23 bzw. 13 im Bereich der jeweiligen Biegekante 26 bzw. 16 entsprechen. Auf diese Weise kann das Spiel und damit eine mögliche Relativbewegung der beiden Seitenwände 10 und 20 in der horizontalen Richtung weitgehend vermieden werden.

Die in der zweiten Seitenwand 20 durch nach-unten-Biegen der zweiten Verbindungslasche 23 entstandene Öffnung 22 weist an ihrem oberen, der Biegekante 26 gegenüberliegenden Rand eine Breite a auf, welche einer Breite a' der ersten Verbindungslasche 13 im Bereich ihrer Wurzel, d.h. im Bereich der Biegekante 16 in etwa entspricht. Da das der Biegekante 16 gegenüberliegende Ende der ersten Verbindungslasche 13 aufgrund ihrer Trapezform im Vergleich dazu schmäler ist, kann die erste Verbindungslasche 13 auf einfache Art und Weise in die Öffnung 22 eingeschoben werden. Bei Zusammenfügen der beiden Seitenwände 10 und 20 wirken die beiden Trapez-Schenkel der ersten Verbindungslasche 13 als Einlaufschrägen, wodurch das Einführen in die Öffnung 22 und damit die Montage der Seitenwand-Anordnung deutlich erleichtert wird. Die Breite b sollte dabei möglichst gleich oder allenfalls geringfügig größer als die Breite b' sein, um eine stabile Verbindung der beiden Seitenwände 10 und 20 zu erreichen.

Entsprechend muss die in der ersten Seitenwand 10 ausgebildete erste Öffnung 12 in ihrem unteren, der Biegekante 16 gegenüberliegenden Bereich eine Breite b aufweisen, welche in etwa der Breite b' der zweiten Verbindungslasche 23 im Bereich ihrer Wurzel, d.h. im Bereich der Biegekante 26 entspricht. Um dies zu ermöglichen weist die erste Öffnung 12 an ihrem unteren, der Biegekante 16 gegenüberliegenden Ende einen zusätzlichen Bereich 17 auf, welcher ebenfalls durch Vorstanzen oder Vorprägen in der Seitenwand 10 definiert ist und vollständig aus der Seitenwand 10 herauslösbar ist, beispielsweise durch Ausschlagen mittels eines Montagehammers. Dieser Bereich 17 weist eine Breite b auf, so dass die zweite Verbindungslasche 23 bis zu ihrer Biegekante 26 hindurchgeführt werden kann. Dabei sollte die Breite b wiederum möglichst gleich oder allenfalls geringfügig größer als die Breite b' gewählt werden, um eine stabile Verbindung der beiden Seitenwände 10 und 20 zu erreichen. Zum Fixieren der Seitenwand-Anordnung werden die beiden Verbindungslaschen 13 und 23 vollständig, d.h. um zirka 180° umgebogen, wodurch eine formschlüssige Kopplung erreicht wird.

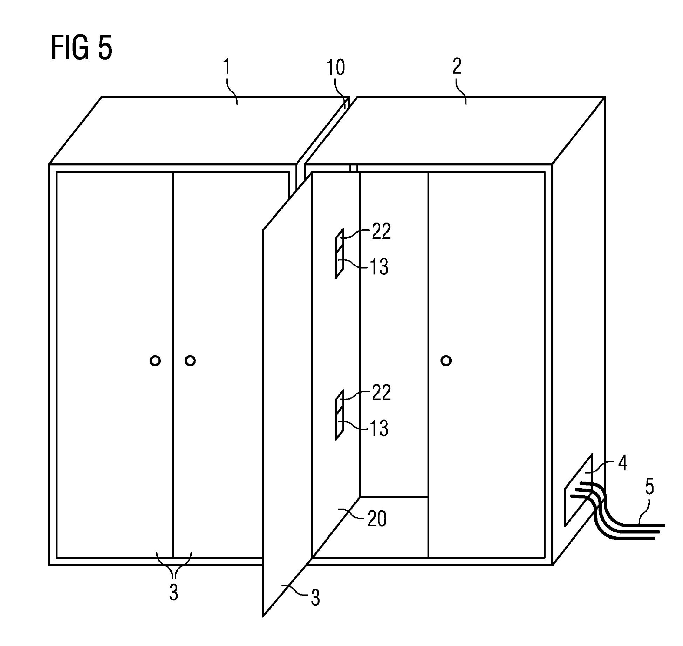

Figur 5 zeigt eine schematische Darstellung einer Verteilerschrank-Anordnung, bestehend aus einem ersten Verteilerschrank 1 und einem zweiten Verteilerschrank 2. Jeder der beiden Verteilerschränke 1 bzw. 2 ist durch zwei Türen 3 verschließbar. Es sind jedoch auch Ausführungen mit nur einer Türe möglich. Über einen Flansch 4, welcher in einer Seitenwand, aber auch in einem Boden-, einem Decken- oder einem Rückteil des Verteilerschranks angebracht sein kann, können eine oder mehrere elektrische Leitungen 5 in das Innere des Verteilerschranks geführt werden. Die beiden Verteilerschränke 1 und 2 sind über ihre Seitenwände 10 bzw. 20 miteinander gekoppelt. Hierzu weist der Verteilerschrank 1 in der Seitenwand 10 zumindest eine Verbindungslasche 13 auf, welche in eine Öffnung 22 in der Seitenwand 20 des zweiten Verteilerschranks 2 einsteckbar ist. Anschließend wird durch Umbiegen der Verbindungslaschen 13 eine formschlüssige Verbindung realisiert.

### Bezugszeichenliste

- 1: erster Verteilerschrank
- 2: zweiter Verteilerschrank
- 3: Türe
- 4: Flansch
- 5: el. Leitung

- 10: Seitenwand
- 11: Verbindungsbereich
- 11': weiterer Verbindungsbereich
- 12: erste Öffnung
- 13: erste Verbindungslasche
- 14: Kontur
- 15: Bohrung
- 16: Biegekante
- 17: Bereich

- 20: zweite Seitenwand
- 21: zweiter Verbindungsbereich
- 22: zweite Öffnung
- 23: zweite Verbindungslasche

- 25: weitere Bohrung
- 26: Biegekante

## Patentansprüche

1. Seitenwand (10) für einen ersten Verteilerschrank (1), welcher zur Aufnahme von Elektroinstallationsgeräten ausgebildet ist,
- wobei die Seitenwand (10) zumindest einen Verbindungsbereich (11) aufweist, welcher zum Koppeln der Seitenwand (10) mit einer benachbart angeordneten, zweiten Seitenwand (20) eines zweiten Verteilerschranks (2) vorgesehen ist,
- wobei der Verbindungsbereich (11) aus der Seitenwand (10) teilweise herauslösbar ist, wodurch eine erste Öffnung (12) in der Seitenwand (10) sowie eine mit der Seitenwand (10) verbundene, erste Verbindungslasche (13) entsteht, welche in eine zweite Öffnung (22) der zweiten Seitenwand (20) einsteckbar ist, um die beiden Seitenwände (10, 20) durch Biegen der ersten Verbindungslasche (13) miteinander zu verbinden.

2. Seitenwand (10) nach Anspruch 1,
wobei der Verbindungsbereich (11) zumindest teilweise von einer vorgestanzten oder vorgeprägten Kontur (14) umgeben ist, um entlang der Kontur (14) ein einfaches Herauslösen der ersten Verbindungslasche (13) zu ermöglichen.

3. Seitenwand (10) nach Anspruch 2,
wobei die Kontur (14) im Wesentlichen u-förmig ausgebildet ist.

4. Seitenwand (10) nach einem der Ansprüche 2 oder 3,
wobei die Kontur (14) trapezförmig ausgebildet ist, wobei das mit der Seitenwand (10) verbundene Ende der ersten Verbindungslasche (13) breiter ist als das herausgelöste, entgegengesetzte Ende der Verbindungslasche (13), um ein einfaches Einführen in die zweite Öffnung (22) zu ermöglichen.

5. Seitenwand (10) nach einem der vorangehenden Ansprüche,
wobei die Seitenwand (10) einen metallischen Werkstoff aufweist.

6. Seitenwand (10) nach einem der vorangehenden Ansprüche,
wobei die erste Verbindungslasche (13) die zweite Seitenwand (20) formschlüssig umgreift.

7. Seitenwand (10) nach einem der vorangehenden Ansprüche,
wobei die zweite Öffnung (22) durch teilweises Herauslösen eines zweiten Verbindungsbereichs (21) aus der zweiten Seitenwand (20) gebildet ist, wodurch eine mit der zweiten Seitenwand (20) verbundene, zweite Verbindungslasche (23) entsteht, welche in die erste Öffnung (12) einsteckbar ist, um die beiden Seitenwände (10, 20) durch Biegen der zweiten Verbindungslasche (23) miteinander zu verbinden.

8. Seitenwand (10) nach einem der vorangehenden Ansprüche,
wobei die erste Verbindungslasche (13) eine erste Bohrung (15) aufweist, welche im montieren Zustand mit einer in der zweiten Seitenwand ausgebildeten weiteren Bohrung (25) zur Deckung gebracht werden kann, um eine zusätzliche Sicherung der Verbindung der beiden Seitenwände (10, 20) - beispielsweise durch Nieten oder Verschrauben - zu ermöglichen.

9. Seitenwand (10) nach einem der vorangehenden Ansprüche,
wobei die Seitenwand (10) einen weiteren Verbindungsbereich (11') zum Koppeln mit der zweiten Seitenwand (20) aufweist.

10. Seitenwand (10) nach einem der vorangehenden Ansprüche,
wobei die Seitenwand (10) des ersten Verteilerschranks (1) mit der zweiten Seitenwand (20) des zweiten Verteilerschranks (2) über zumindest eine erste Verbindungslasche (13, 23) gekoppelt ist.

11. Seitenwand-Anordnung zum formschlüssigen Koppeln zweier Seitenwände,
- mit einer ersten Seitenwand (10) eines ersten Verteilerschranks (1) und einer hierzu benachbart angeordneten zweiten Seitenwand (20) eines zweiten Verteilerschranks (2),
- wobei die erste Seitenwand (10) eine einstückig angeformte Verbindungslasche (13) aufweist, welche durch teilweises Herauslösen aus der ersten Seitenwand (10) gebildet ist, wodurch eine erste Öffnung (12) in der ersten Seitenwand (10) gebildet wird,
- wobei die Verbindungslasche (13) durch eine in der zweiten Seitenwand (20) ausgebildete zweite Öffnung (22) geführt ist und die zweite Seitenwand (22) formschlüssig umgreift, um die beiden Seitenwände (10, 20) miteinander zu koppeln.

12. Seitenwand-Anordnung nach Anspruch 8,
- wobei die zweite Seitenwand (20) eine einstückig angeformte zweite Verbindungslasche (23) aufweist, welche durch Herauslösen aus der zweiten Seitenwand (20) gebildet ist, wodurch die zweite Öffnung (22) in der zweiten Seitenwand (20) gebildet wird,
- wobei die zweite Verbindungslasche (23) durch die erste Öffnung (12) geführt ist und die erste Seitenwand (10) formschlüssig umgreift.

13. Verteilerschrank (1, 2), welcher zur Aufnahme von Elektroinstallationsgeräten ausgebildet ist und zumindest eine Seitenwand (10, 20) nach einem der Ansprüche 1 bis 10 aufweist.
